# EUROPEAN PATENT APPLICATION

(11) **EP 2 889 748 A1**
(43) Date of publication of application: **01.07.2015**
(21) Application number: 14196475.9
(22) Date of filing: 05.12.2014
(51) Int. Cl.: G06F 3/0488, G06F 3/041, G06F 3/042

(54) **TOUCH-SENSITIVE DISPLAY DEVICE WITH PALM INPUT REJECTION**

(30) Priority: 27.12.2013 JP 2013271571
(71) Applicant: Funai Electric Co., Ltd., Daito-shi, Osaka 574-0013 (JP)
(72) Inventor: Nishioka, Ken, Daito-shi, Osaka 574-0013 (JP)
(74) Representative: Grünecker Patent- und Rechtsanwälte PartG mbB

(57) **Abstract**

An image display device (100) includes a control portion (40) acquiring a detection image (70) containing a first region (71) and a second region (72) on the basis of detected intensity detected by a light detection portion (30). The control portion is configured to perform control of determining what the light detection portion has detected an indication object (61) or an object other than the indication object (63) on the basis of the overlapping state of the first region and the second region.

## Description

### BACKGROUND OF THE INVENTION

### Field of the Invention

The present invention relates to an image display device, and more particularly, it relates to an image display device including a light detection portion detecting light reflected by an indication object.

### Description of the Background Art

An image display device including a light detection portion detecting light reflected by an indication object is known in general, as disclosed in Japanese Patent Laying-Open No. 2013-120586.

Japanese Patent Laying-Open No. 2013-120586 discloses a projector (image display device) including a projection unit projecting an image on a projection surface, a reference light emission unit emitting reference light to the projection surface, and an imaging portion (light detection portion) imaging the reference light reflected by an object (indication object) indicating a part of the image projected on the projection surface. In the projector described in Japanese Patent Laying-Open No. 2013-120586, the reference light is reflected toward the front side of the projection surface, and a position indicated by the object such as a user's finger can be detected by the imaging portion when the object such as the user's finger indicates the part of the image on the rear side opposite to the front side on which the image on the projection surface is projected.

In the projector according to Japanese Patent Laying-Open No. 2013-120586, however, when a user indicates the image on the projection surface while gripping his/her fingers other than his/her finger for indication, his/her fingers other than his/her finger for indication come close to the projection surface, and hence both his/her finger for indication and his/her fingers other than his/her finger for indication may be detected. In this case, the projector cannot determine which detection result corresponds to his/her finger for indication intended by the user.

### SUMMARY OF THE INVENTION

The present invention has been proposed in order to solve the aforementioned problem, and an object of the present invention is to provide an image display device capable of reliably determining an indication object and an object other than the indication object which have been detected.

In order to attain the aforementioned object, an image display device according to an aspect of the present invention includes a light detection portion detecting light reflected by an indication object and an object other than the indication object in the vicinity of a projection image and a control portion acquiring a detection image containing a first region where intensity greater than a first threshold is detected and a second region where intensity greater than a second threshold less than the first threshold is detected on the basis of detected intensity detected by the light detection portion, and the control portion is configured to perform control of determining what the light detection portion has detected the indication object or the object other than the indication object on the basis of the overlapping state of the first region and the second region in the detection image.

As hereinabove described, the image display device according to the aspect of the present invention is provided with the control portion acquiring the detection image containing the first region where the intensity greater than the first threshold is detected and the second region where the intensity greater than the second threshold less than the first threshold is detected on the basis of the detected intensity detected by the light detection portion, whereby the first region and the second region corresponding to the size of the indication object can be obtained from the indication object, and the first region and the second region corresponding to the size of the object other than the indication object can be obtained from the object other than the indication object. Furthermore, the control portion is configured to perform control of determining what the light detection portion has detected the indication object or the object other than the indication object on the basis of the overlapping state of the first region and the second region in the detection image, whereby the indication object and the object other than the indication object can be reliably determined by utilizing a difference between the overlapping state of the first region and the second region corresponding to the indication object and the overlapping state of the first region and the second region corresponding to the object other than the indication object. Thus, the detection accuracy of an indication position indicated by the indication object can be improved when the control portion acquires the indication position indicated by the indication object, for example, and hence malfunction resulting from a reduction in the detection accuracy of the indication position can be prevented.

In the aforementioned image display device according to the aspect, the control portion is preferably configured to perform control of acquiring a difference between the size of the first region and the size of the second region or the ratio of the size of the second region to the size of the first region on the basis of the overlapping state of the first region and the second region in the detection image and determining that the light detection portion has detected the indication object when the difference between the size of the first region and the size of the second region which has been acquired is not greater than a first value or when the ratio of the size of the second region to the size of the first region which has been acquired is not greater than a second value. According to this structure, the fact that the size of the obtained first region and the size of the obtained second region are significantly different from each other in the object other than the indication object such as user's gripped fingers and the size of the obtained first region and the size of the obtained second region are not significantly different from each other in the indication object such as a user's finger (the difference between the size of the first region and the size of the second region is not greater than the first value, or the ratio of the size of the second region to the size of the first region is not greater than the second value) can be utilized to reliably recognize the indication object. Thus, an operation intended by a user can be reliably executed.

In this case, the control portion is preferably configured to perform control of determining that the light detection portion has detected the object other than the indication object when the difference between the size of the first region and the size of the second region which has been acquired is greater than the first value or when the ratio of the size of the second region to the size of the first region which has been acquired is greater than the second value. According to this structure, in addition to the indication object, the object other than the indication object can be recognized. Consequently, various operations can be performed according to whether the recognized object is the indication object or the object other than the indication object.

In the aforementioned structure of acquiring the difference between the size of the first region and the size of the second region or the ratio of the size of the second region to the size of the first region, the size of the first region and the size of the second region are preferably the sizes of the short axis diameters of the first region and the second region or the sizes of the long axis diameters of the first region and the second region in the case where the first region and the second region are nearly ellipsoidal, or the size of the area of the first region and the size of the area of the second region. According to this structure, the difference between the size of the first region and the size of the second region or the ratio of the size of the second region to the size of the first region can be easily acquired.

In this case, the size of the first region and the size of the second region are preferably the sizes of the short axis diameters of the first region and the second region in the case where the first region and the second region are nearly ellipsoidal. With respect to the indication object such as the user's finger, the widths (the widths in short-side directions) are conceivably acquired as the sizes of the short axis diameters. Therefore, according to the aforementioned structure, variations in the size of the short axis diameter of the obtained first region and the size of the short axis diameter of the obtained second region can be suppressed unlike the case where the sizes of the long axis diameters are employed with respect to the indication object such as the user's finger. Consequently, the indication object can be easily recognized.

In the aforementioned image display device according to the aspect, the projection image is preferably projected from a side opposite to a side on which indication is performed by the indication object toward the indication object. According to this structure, light can be easily reflected by the indication object coming close in a light emission direction, and hence the detection image containing the first region and the second region can be easily acquired.

In the aforementioned image display device according to the aspect, the control portion is preferably configured to recognize a plurality of indication objects individually on the basis of the overlapping state of the first region and the second region in the detection image when there are the plurality of indication objects. According to this structure, the plurality of indication objects are recognized individually, and hence processing based on an operation (a pinch-in operation or a pinch-out operation, for example) performed by the plurality of indication objects can be reliably executed.

In the aforementioned image display device according to the aspect, the control portion is preferably configured to perform control of acquiring an indication position indicated by the indication object on the basis of the first region corresponding to the indication object which has been detected when determining that the light detection portion has detected the indication object. According to this structure, the indication position indicated by the indication object, intended by the user can be reliably detected, and hence an operation on an icon intended by the user can be properly executed when the user clicks or drags the icon of the projection image.

In this case, the control portion is preferably configured to perform control of invalidating a detection signal related to the object other than the indication object which has been detected when determining that the light detection portion has detected the object other than the indication object. According to this structure, detection of an indication position indicated by the object other than the indication object, not intended by the user can be suppressed.

In the aforementioned image display device according to the aspect, the control portion is preferably configured to perform control of determining that the light detection portion has detected the object other than the indication object regardless of the overlapping state of the first region and the second region when the size of the first region which has been acquired is larger than a prescribed size. According to this structure, when the first region significantly larger than the size of the first region obtained from the indication object such as the user's finger is obtained (when the size of the first region is larger than the prescribed size), the indication object and the object other than the indication object can be reliably determined by determining that the light detection portion has detected the object other than the indication object.

In the aforementioned image display device according to the aspect, the indication object is preferably a user's finger, and the control portion is preferably configured to acquire the orientation of a palm in the extensional direction of a portion of the second region not overlapping with the first region from the first region on the basis of the first region and the second region corresponding to the user's finger which has been detected when determining that the light detection portion has detected the user's finger as the indication object. According to this structure, whether a plurality of fingers are parts of the same hand or parts of different hands can be determined by checking the orientations of palms corresponding to the plurality of fingers when the plurality of fingers are detected as the indication object, for example. Therefore, an image operation performed by the plurality of fingers can be properly executed according to the case of the same hand and the case of the different hands.

In this case, the control portion is preferably configured to perform control of acquiring the first orientation of a palm corresponding to a first user's finger and the second orientation of a palm corresponding to a second user's finger different from the first user's finger and determining that the first user's finger and the second user's finger are parts of the same hand when a line segment extending in the first orientation of the palm and a line segment extending in the second orientation of the palm intersect with each other. According to this structure, the fact that fingers in which the line segments extending in the orientations of the palms intersect with each other are the parts of the same hand can be utilized to easily determine that the first user's finger and the second user's finger are the parts of the same hand. Furthermore, a special operation performed by the same hand, such as a pinch-in operation of reducing the image or a pinch-out operation of enlarging the image, for example, can be reliably executed on the basis of an operation performed by the first user's finger and an operation performed by the second user's finger, determined to be the parts of the same hand.

In the aforementioned structure in which the control portion acquires the orientation of the palm, the control portion is preferably configured to perform control of acquiring the first orientation of a palm corresponding to a first user's finger and the second orientation of a palm corresponding to a second user's finger different from the first user's finger and determining that the first user's finger and the second user's finger are parts of different hands when a line segment extending in the first orientation of the palm and a line segment extending in the second orientation of the palm do not intersect with each other. According to this structure, the fact that fingers in which the line segments extending in the orientations of the palms do not intersect with each other are the parts of the different hands can be utilized to easily determine that the first user's finger and the second user's finger are the parts of the different hands when a plurality of users operate one image or when a single user operates one image with his/her different fingers. Consequently, an operation intended by the user can be reliably executed.

The aforementioned image display device according to the aspect preferably further includes a projection portion projecting the projection image and a display portion on which the projection image is projected by the projection portion, and the light detection portion is preferably configured to detect light emitted to the display portion by the projection portion, reflected by the indication object and the object other than the indication object. According to this structure, the light detection portion can detect the light emitted to the display portion by the projection portion, and hence no projection portion configured to emit the light for detection may be provided separately from the projection portion projecting the projection image for operation. Therefore, an increase in the number of components in the image display device can be suppressed.

The aforementioned image display device according to the aspect is preferably configured to be capable of forming an optical image corresponding to the projection image in the air and preferably further includes an optical image forming member to which light forming the projection image is emitted from a first surface side, configured to form the optical image corresponding to the projection image in the air on a second surface side, and the light detection portion is preferably configured to detect the light reflected by the indication object and the object other than the indication object. According to this structure, unlike the case where the projection image is projected on the display portion which is a physical entity, the user can operate the optical image formed in the air which is not a physical entity, and hence no fingerprint (oil) or the like of the user's finger is left on the display portion. Therefore, difficulty in viewing the projection image can be suppressed. When the user operates the optical image formed in the air which is not a physical entity, the indication object such as the user's finger and the optical image may be so close to each other as to be partially almost coplanar with each other. In this case, it is very effective from a practical perspective that the indication object and the object other than the indication object detected by the light detection portion can be determined.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing the overall structure of an image display device according to a first embodiment of the present invention;
Fig. 2 is a block diagram of a projector portion of the image display device according to the first embodiment of the present invention;
Fig. 3 is a block diagram of a coordinate detection portion of the image display device according to the first embodiment of the present invention;
Fig. 4 is a diagram for illustrating an image operation performed by a user in the image display device according to the first embodiment of the present invention;
Fig. 5 is a diagram for illustrating a detection image of the image display device according to the first embodiment of the present invention;
Fig. 6 is a diagram for illustrating the relationship between detected intensity and a threshold in the image display device according to the first embodiment of the present invention;
Fig. 7 is a diagram for illustrating the detection image of the image display device according to the first embodiment of the present invention in the case where a first region is large;
Fig. 8 is a flowchart for illustrating fingertip detection processing in the image display device according to the first embodiment of the present invention;
Fig. 9 is a flowchart for illustrating reflection object detection processing in the image display device according to the first embodiment of the present invention;
Fig. 10 is a flowchart for illustrating fingertip determination processing in the image display device according to the first embodiment of the present invention;
Fig. 11 is a diagram for illustrating an image operation performed by a user in an image display device according to a second embodiment of the present invention;
Fig. 12 is a diagram for illustrating a detection image of the image display device according to the second embodiment of the present invention;
Fig. 13 is a flowchart for illustrating fingertip detection processing in the image display device according to the second embodiment of the present invention;
Fig. 14 is a diagram for illustrating an image operation performed by a user in an image display device according to a third embodiment of the present invention;
Fig. 15 is a diagram for illustrating a detection image of the image display device according to the third embodiment of the present invention;
Fig. 16 is a flowchart for illustrating hand determination processing in the image display device according to the third embodiment of the present invention;
Fig. 17 is a diagram showing the overall structure of an image display device according to a fourth embodiment of the present invention;
Fig. 18 is a diagram for illustrating an image operation performed by a user in the image display device according to the fourth embodiment of the present invention; and
Fig. 19 is a diagram for illustrating an image display device according to a modification of the first to fourth embodiments of the present invention.

### DESCRIPTION OF THE PREFERRED EMBODIMENTS

Embodiments of the present invention are hereinafter described with reference to the drawings.

### (First Embodiment)

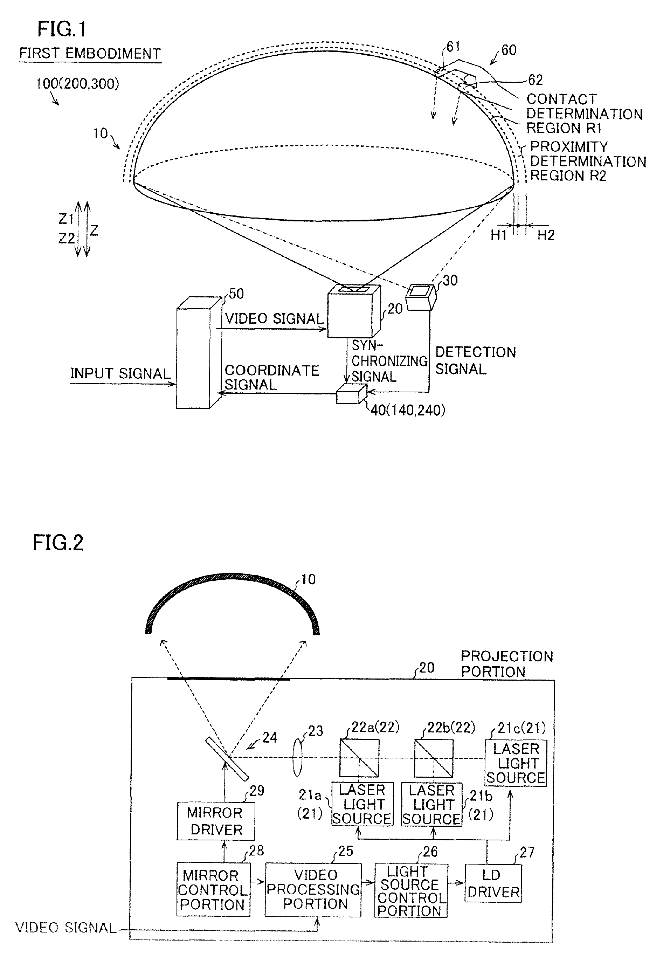

The structure of an image display device 100 according to a first embodiment of the present invention is now described with reference to Figs. 1 to 10.

The image display device 100 according to the first embodiment of the present invention includes a display portion 10 on which an unshown projection image is projected, a projection portion 20 projecting the projection image formed by laser light on the display portion 10, a light detection portion 30 detecting the laser light emitted to the display portion 10 as the projection image, which is reflected light reflected by a user's finger or the like, a coordinate detection portion 40 calculating an indication position on the display portion 10 indicated by a user as coordinates on the display portion 10 on the basis of the detected intensity of the reflected light detected by the light detection portion 30, and an image processing portion 50 outputting a video signal containing the projection image projected on the display portion 10 to the projection portion 20, as shown in Fig. 1. The image display device 100 is a rear-projection projector in which the projection portion 20 projects the projection image from the rear side (Z2 side) of the display portion 10 toward the front side (Z1 side). In other words, in this image display device 100, the projection portion 20 projects the projection image from a side (Z2 side) opposite to a side on which indication is performed by an indication object 61 toward the indication object 61. The coordinate detection portion 40 is an example of the "control portion" in the present invention.

Fig. 1 shows the case where the laser light is reflected by both the indication object 61 (a user's forefinger in Fig. 1) indicating the indication position intended by the user and a non-indication object 62 (a user's thumb in Fig. 1) indicating an indication position not intended by the user in a state where a user's hand 60 comes close to the display portion 10 in order to operate the projection image. The image display device 100 is configured to detect the indication object 61 and the non-indication object 62 by the light detection portion 30 and determine the indication object 61 and the non-indication object 62 by the coordinate detection portion 40 on the basis of the detection result in this case. Furthermore, the image display device 100 is configured to output a coordinate signal containing coordinate information obtained on the basis of the detection result of the indication object 61 from the coordinate detection portion 40 to the image processing portion 50 and output a video signal containing an image changed in response to a user operation from the image processing portion 50 to the projection portion 20. Thus, the user can reliably execute an intended operation. Processing for determining the indication object and the non-indication object is described in detail after the description of each component. The user's thumb as the non-indication object 62 is an example of the "object other than the indication object" in the present invention.

Each component of the image display device 100 is now described with reference to Figs. 1 to 3.

The display portion 10 has a curved projection surface on which the projection portion 20 projects the projection image, as shown in Fig. 1. The projection image projected on the display portion 10 includes a display image displayed on a screen of an external device such as an unshown PC, for example. This image display device 100 is configured to project the display image displayed on the screen of the external device such as the PC or the like on the display portion 10 and allow the user to perform an image operation by touching the image on the display portion 10.

The projection portion 20 includes three (blue (B), green (G), and red (R)) laser light sources 21 (21a, 21b, and 21c), two beam splitters 22 (22a and 22b), a lens 23, a laser light scanning portion 24, a video processing portion 25, a light source control portion 26, an LD (laser diode) driver 27, a mirror control portion 28, and a mirror driver 29, as shown in Fig. 2. The projection portion 20 is configured such that the laser light scanning portion 24 scans laser light on the projection portion 10 on the basis of a video signal input into the video processing portion 25.

The laser light source 21a is configured to emit blue laser light to the laser light scanning portion 24 through the beam splitter 22a and the lens 23. The laser light sources 21b and 21c are configured to emit green laser light and red laser light, respectively, to the laser light scanning portion 24 through the beam splitters 22b and 22a and the lens 23.

The laser light scanning portion 24 is constituted by a MEMS (Micro Electro Mechanical System) mirror. The laser light scanning portion 24 is configured to scan laser light by reflecting the laser light emitted from the laser light sources 21 by the MEMS mirror.

The video processing portion 25 is configured to control video projection on the basis of the video signal input from the image processing portion 50 (see Fig. 1). Specifically, the video processing portion 25 is configured to control driving of the laser light scanning portion 24 through the mirror control portion 28 and control laser light emission from the laser light sources 21a to 21c through the light source control portion 26 on the basis of the video signal input from the image processing portion 50.

The light source control portion 26 is configured to control laser light emission from the laser light sources 21a to 21c by controlling the LD driver 27 on the basis of the control performed by the video processing portion 25. Specifically, the light source control portion 26 is configured to control each of the laser light sources 21a to 21c to emit laser light of a color corresponding to each pixel of the projection image in line with the scanning timing of the laser light scanning portion 24.

The mirror control portion 28 is configured to control driving of the laser light scanning portion 24 by controlling the mirror driver 29 on the basis of the control performed by the video processing portion 25.

The light detection portion 30 is configured to detect the reflected light of laser light forming the projection image projected on the display portion 10 by the projection portion 20, reflected by the user's finger or the like, as shown in Fig. 1. In other words, the laser light forming the projection image emitted by the projection portion 20 doubles as laser light for detection detected by the light detection portion 30. The light detection portion 30 is configured to output detection signals according to the detected intensity of the detected reflected light to the coordinate detection portion 40.

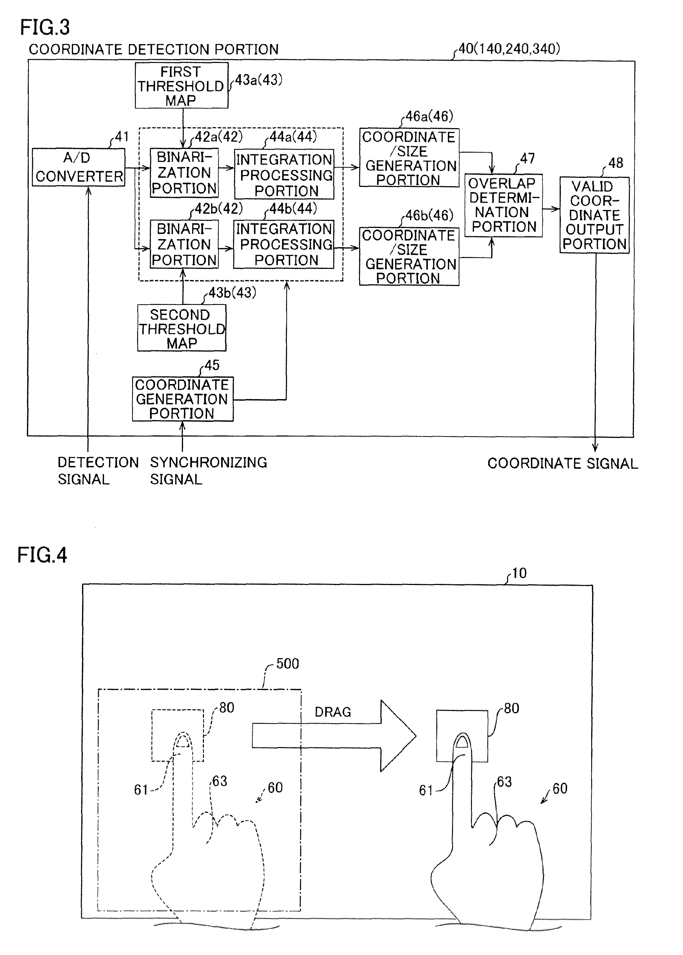

The coordinate detection portion 40 includes an A/D converter 41, two binarization portions 42 (42a and 42b), two threshold maps 43 (a first threshold map 43a and a second threshold map 43b), two integration processing portions 44 (44a and 44b), a coordinate generation portion 45, two coordinate/size generation portions 46 (46a and 46b), an overlap determination portion 47, and a valid coordinate output portion 48, as shown in Fig. 3.

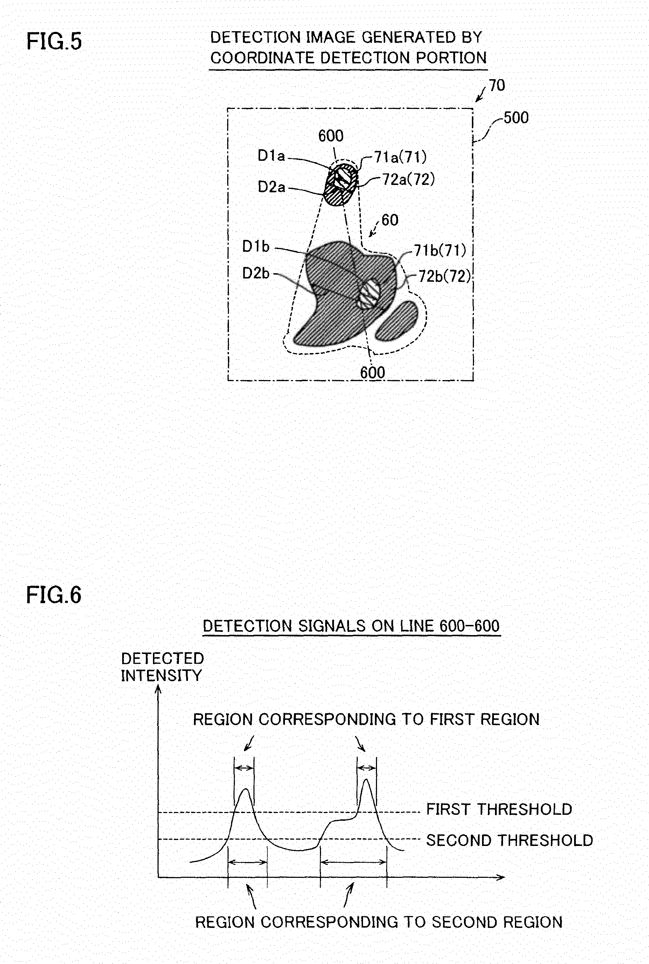

The coordinate detection portion 40 is configured to generate a detection image 70 (see Fig. 5) corresponding to a detection object (the user's hand 60 including the indication object 61 and non-indication objects 62 and 63 (described later)) detected on the display portion 10 (see Fig. 1) on the basis of the detected intensity of the reflected light detected by the light detection portion 30 (see Fig. 1) and the timing of detecting the reflected light. Specifically, the coordinate detection portion 40 is configured to generate the detection image 70 containing first regions 71 (see Fig. 5) described later, where the detected intensity greater than a first threshold is detected and second regions 72 (see Fig. 5) described later, where the detected intensity greater than a second threshold less than the first threshold is detected. This detection image 70 is described in detail at the time of the description of Fig. 5. The first threshold and the second threshold are thresholds for determining the degree of proximity between the detection object and the display portion 10. Specifically, the first threshold is a threshold for determining whether or not the detection object is located in a contact determination region R1 (see Fig. 1) inside (the side of the display portion 10) a first height H1 where the detection object and the display portion 10 are so close to each other as to be almost in contact with each other, and the second threshold is a threshold for determining whether or not the detection object is located in the contact determination region R1 and a proximity determination region R2 (see Fig. 1) inside a second height H2 where the detection object and the display portion 10 are sufficiently close to each other. In the case where the detected intensity not greater than the first threshold and greater than the second threshold is obtained, it can be determined that the detection object is located in the proximity determination region R2.

The A/D converter 41 is configured such that the detection signals according to the detected intensity of the reflected light detected by the light detection portion 30 are input thereinto and is configured to convert the input detection signals from analog signals to digital signals.

The two binarization portions 42a and 42b are configured such that the detection signals which have been converted to the digital signals by the A/D converter 41 are input thereinto. Specifically, the binarization portion 42a is configured to perform binarization processing for comparing the input detection signals with the first threshold and outputting the digital signals as 1 when the detection signals are greater than the first threshold and outputting the digital signals as 0 when the detection signals are not greater than the first threshold. The binarization portion 42b is configured to perform binarization processing for comparing the input detection signals with the second threshold and outputting the digital signals as 1 when the detection signals are greater than the second threshold and outputting the digital signals as 0 when the detection signals are not greater than the second threshold. Thus, binarization employing the first threshold and the second threshold suffices for detection processing, and hence an increase in the volume of detection data can be suppressed.

The first threshold map 43a and the second threshold map 43b are configured to be capable of providing the first threshold and the second threshold which are made different according to positions (coordinates) on the display portion 10 for the binarization portions 42a and 42b, respectively. Specifically, the first threshold map 43a and the second threshold map 43b are configured to be capable of providing the first threshold and the second threshold made different according to distances between the light detection portion 30 and the positions (coordinates) on the display portion 10 for the binarization portions 42a and 42b, respectively. Thus, it can be accurately determined whether the detection object (the user's hand 60 including the indication object 61 and the non-indication objects 62 and 63 (described later)) is located in the contact determination region R1, the proximity determination region R2, or a region other than these regions even when the detection signals are obtained from any position (coordinates) on the display portion 10 regardless of the distances between the light detection portion 30 and the positions (coordinates) on the display portion 10.

The integration processing portions 44a and 44b are configured to generate the detection image 70 (see Fig. 5) described later on the basis of the detection signals binarized by the binarization portions 42a and 42b. Specifically, the integration processing portion 44a is configured to recognize that the detection signals have been obtained from the same object when the detection positions (coordinates) on the display portion 10 of the detection signals greater than the first threshold are within a prescribed range. In other words, the integration processing portion 44a generates the first regions 71 (see Fig. 5) formed of pixels corresponding to the detection positions (coordinates) of the detection signals recognized as the detection signals obtained from the same object. Similarly, the integration processing portion 44b is configured to recognize that the detection signals have been obtained from the same object when the detection positions (coordinates) on the display portion 10 of the detection signals greater than the second threshold are within a prescribed range and generate the second regions 72 (see Fig. 5) formed of pixels corresponding to the detection positions.

The coordinate generation portion 45 is configured such that synchronizing signals are input from the projection portion 20 thereinto and is configured to generate detection coordinates on the display portion 10 on the basis of the input synchronizing signals, and provide the detection coordinates for the binarization portions 42 (42a and 42b) and the integration processing portions 44 (44a and 44b). Thus, the binarization portions 42 (42a and 42b) and the integration processing portions 44 are configured to be capable of specifying the detection positions (coordinates) of the detection signals.

The coordinate/size generation portions 46a and 46b are configured to calculate the coordinates and sizes of the first regions 71 of the detection image 70 generated by the integration processing portion 44a and the coordinates and sizes of the second regions 72 of the detection image 70 generated by the integration processing portion 44b, respectively. For example, the central coordinates, the coordinates of the centers of gravity, or other coordinates of the first regions 71 and the second regions 72 may be employed as the coordinates of the first regions 71 and the second regions 72. The sizes of the short axis diameters or the long axis diameters of the first regions 71 and the second regions 72 in the case where the first regions 71 and the second regions 72 are nearly ellipsoidal, the sizes of the areas of the first regions 71 and the second regions 72, or other sizes may be employed as the sizes of the first regions 71 and the second regions 72. In this first embodiment, the case where the coordinate/size generation portion 46 calculates the central coordinates of the first regions 71 and the second regions 72 as the coordinates and calculates the sizes of the short axis diameters of the first regions 71 and the second regions 72 in the case where the first regions 71 and the second regions 72 are nearly ellipsoidal as the sizes is described.

The overlap determination portion 47 and the valid coordinate output portion 48 are configured to determine the overlapping states of the first regions 71 of the detection image 70 generated by the integration processing portion 44a and the second regions 72 of the detection image 70 generated by the integration processing portion 44b. Specifically, the overlap determination portion 47 is configured to select an overlapping combination of the first regions 71 of the detection image 70 generated by the integration processing portion 44a and the second regions 72 of the detection image 70 generated by the integration processing portion 44b.

The valid coordinate output portion 48 is configured to determine whether or not a difference between the sizes (short axis diameters) of a first region 71 and a second region 72 of the detection image 70 overlapping with each other selected by the overlap determination portion 47 is not greater than a prescribed value. The valid coordinate output portion 48 is configured to validate the central coordinates of the first region 71 when the difference between the sizes (short axis diameters) of the first region 71 and the second region 72 of the detection image 70 overlapping with each other is not greater than the prescribed value and output the coordinate signal to the image processing portion 50. The valid coordinate output portion 48 is configured to invalidate the central coordinates of the first region 71 when the difference between the sizes (short axis diameters) of the first region 71 and the second region 72 of the detection image 70 overlapping with each other is greater than the prescribed value. The prescribed value is an example of the "first value" in the present invention.

The image processing portion 50 is configured to output a video signal containing the projection image according to an input signal from the external device such as the PC and the coordinate signal from the coordinate detection portion 40, as shown in Fig. 1.

The detection image generated by the coordinate detection portion 40 on the basis of the detected intensity of the reflected light detected by the light detection portion 30 is now described with reference to Figs. 1 and 4 to 6. An example in which the coordinate detection portion 40 generates the detection image 70 corresponding to the user's hand 60 when the user drags an icon 80 in the projection image projected on the display portion 10 is described here.

As shown in Fig. 4, the icon 80 corresponding to an operation desired by the user is displayed (projected) on the display portion 10. Fig. 4 shows the case where the user's forefinger as the indication object 61 indicates the icon 80 and slides the indicated icon 80. In this case, the indication object 61 indicating the icon 80 is detected by the light detection portion 30 (see Fig. 1), and the non-indication object 63 (a user's middle finger in Fig. 4) as user's gripped fingers is also detected by the light detection portion 30 since the gripped fingers other than the forefinger also come close to the display portion 10. Therefore, two objects of the indication object 61 and the non-indication object 63 are detected by the light detection portion 30, and hence an operation performed by the non-indication object 63, not intended by the user may be executed in the case where no processing is performed. In Fig. 4, the display portion 10 is illustrated as a rectangular plane for ease of understanding. The user's middle finger and gripped fingers as the non-indication object 63 are examples of the "object other than the indication object" in the present invention.

Fig. 5 shows the detection image 70 (an image of the user's hand 60 including the indication object 61 and the non-indication object 63) generated by the coordinate detection portion 40 on the basis of the detected intensity of the reflected light detected by the light detection portion 30. The detection image 70 in Fig. 5 shows the detection image of the user's hand 60 at the position of a frame border 500 (shown by a one-dot chain line) in Fig. 4. In Fig. 5, a figure corresponding to the user's hand 60 is shown by a broken line for ease of understanding.

The detection image 70 includes a first region 71a (shown by wide hatching) and a second region 72a (shown by narrow hatching) obtained from the indication object 61 and a first region 71b (shown by wide hatching) and a second region 72b (shown by narrow hatching) obtained from the non-indication object 63, as shown in Fig. 5. Specifically, in the detection image 70, the first region 71a and the second region 72a obtained from the indication object 61 overlap with each other, and the first region 71b and the second region 72b obtained from the non-indication object 63 overlap with each other. More specifically, in the detection image 70, the first region 71a and the second region 72a in a size corresponding to the size of the user's forefinger are obtained from the indication object 61, and the first region 71b in a size corresponding to the size of the user's middle finger and the second region 72b in a size corresponding to the size of the user's gripped fingers (fist) are obtained from the non-indication object 63. Thus, the fact that the sizes (short axis diameters) of the first region 71 and the second region 72 overlapping with each other corresponding to the indication object 61 are different from the sizes (short axis diameters) of the first region 71 and the second region 72 overlapping with each other corresponding to the non-indication object 63 can be utilized to determine the indication object 61 and the non-indication object 63.

Specifically, the coordinate detection portion 40 determines that the first region 71 (71a or 71b) and the second region 72 (72a and 72b) overlapping with each other are the indication object 61 when a difference between the short axis diameter D1 (D1a or D1b) of the first region 71 and the short axis diameter D2 (D2a or D2b) of the second region 72 is not greater than the prescribed value. The coordinate detection portion 40 determines that the first region 71 (71a or 71b) and the second region 72 (72a and 72b) overlapping with each other are the non-indication object 63 when the difference between the short axis diameter D1 of the first region 71 and the short axis diameter D2 of the second region 72 is greater than the prescribed value.

Fig. 6 shows detection signals on the line 600-600 of the detection image 70 as examples of the detection signals. Regions where the detected intensity is greater than the first threshold are regions corresponding to the first regions 71 of the detection image 70, and regions where the detected intensity is greater than the second threshold are regions corresponding to the second regions 72 of the detection image 70. The second threshold is set to a value of about 60% of the first threshold. In Fig. 6, the first threshold and the second threshold are illustrated to be constant regardless of a detection position on the display portion 10 for ease of understanding, but the first threshold and the second threshold actually vary (change) according to a distance between the light detection portion 30 and the detection position on the display portion 10.

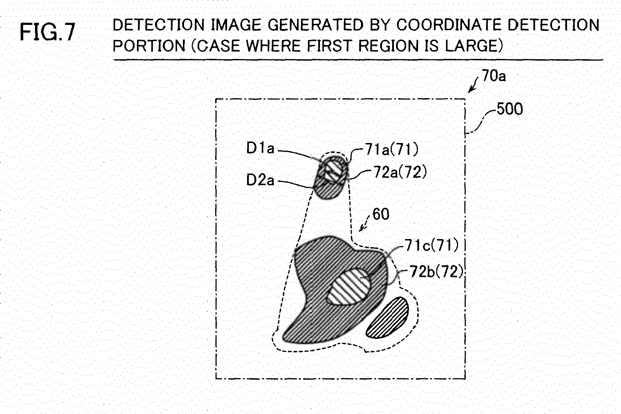

Fig. 7 shows an example in which the coordinate detection portion 40 generates a detection image 70a corresponding to the user's hand 60 on the basis of the detected intensity of the reflected light detected by the light detection portion 30 as another example of the detection image corresponding to the user's hand 60.

The detection image 70a is a detection image obtained in the case where the non-indication object 63 comes closer to the display portion 10 as compared with the case where the detection image 70 (see Fig. 5) is obtained. Therefore, in the detection image 70a, a first region 71c larger than the first region 71b (see Fig. 5) of the detection image 70 corresponding to the non-indication object 63 is formed. The detection image 70a is the same as the detection image 70 except for a difference in the size of the first region corresponding to the non-indication object 63. Also in this case, an object obviously larger than the user's finger is conceivably detected, and hence the coordinate detection portion 40 determines that an object other than the indication object 61 has been detected. Specifically, the coordinate detection portion 40 determines that the light detection portion 30 has detected the non-indication object 63 regardless of the overlapping state of the first region 71 and the second region 72 when the first region 71c is larger than a prescribed size. The prescribed size denotes a size (short axis diameter) substantially corresponding to the size of the user's two fingers, for example.

The aforementioned processing for determining the indication object 61 and the non-indication object 63 and outputting the indication position (coordinates) of the indication object 61 on the basis of the determination result is now described on the basis of flowcharts with reference to Figs. 1, 4, 5, and 8 to 10.

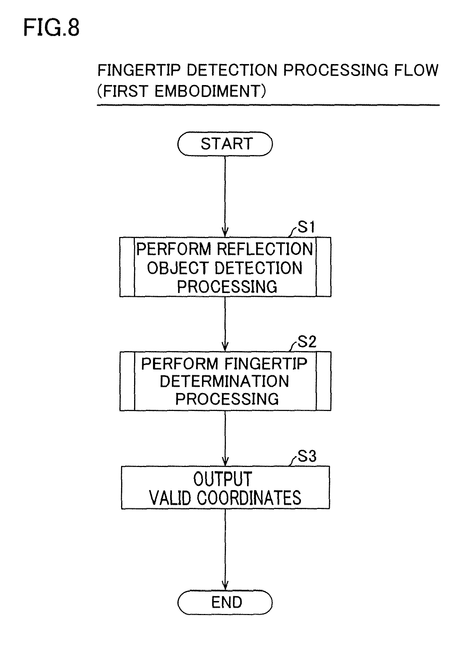

A flowchart for fingertip detection processing showing overall processing is shown in Fig. 8. In the fingertip detection processing, the coordinate detection portion 40 (see Fig. 1) performs processing (reflection object detection processing) for generating the detection image 70 (see Fig. 5) of the indication object 61 (see Fig. 4) and the non-indication object 63 (see Fig. 4) on the basis of the detected intensity of the reflected light detected by the light detection portion 30 (see Fig. 1) at a step S1. Then, the coordinate detection portion 40 performs processing (fingertip determination processing) for determining the indication object 61 and the non-indication object 63 by utilizing the fact that the sizes (short axis diameters) of the first region 71 (see Fig. 5) and the second region 72 (see Fig. 5) overlapping with each other corresponding to the indication object 61 are different from the sizes (short axis diameters) of the first region 71 (see Fig. 5) and the second region 72 (see Fig. 5) overlapping with each other corresponding to the non-indication object 63 at a step S2. Then, the coordinate detection portion 40 performs control of validating the central coordinates of the first region 71 (71a) corresponding to the indication object 61 determined to be an indication object and outputting the coordinate signal to the image processing portion 50 (see Fig. 1) at a step S3. The coordinate detection portion 40 performs this fingertip detection processing per frame, setting an operation of displaying one still image constituting a moving image as one frame.

The reflection object detection processing is now described specifically on the basis of a flowchart with reference to Figs. 1, 5, and 9.

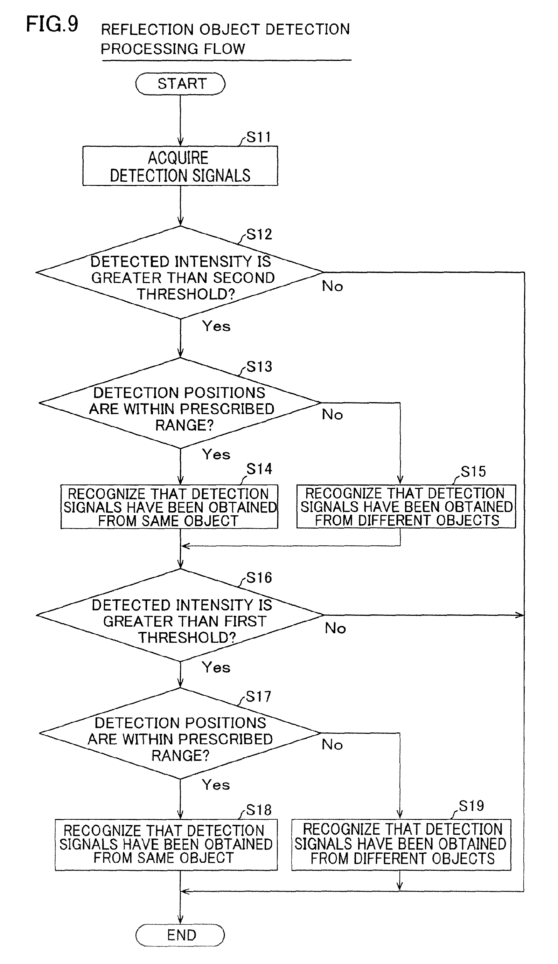

First, the coordinate detection portion 40 acquires the detection signals corresponding to the indication object 61 and the non-indication object 63 detected by the light detection portion 30 at a step S11, as shown in Fig. 9. Then, the coordinate detection portion 40 determines whether or not the acquired detection signals are greater than the second threshold at a step S12. When determining that the detection signals are not greater than the second threshold, the coordinate detection portion 40 determines that the detection object is located in a region other than the contact determination region R1 (see Fig. 1) and the proximity determination region R2 (see Fig. 1) and terminates the reflection object detection processing.

When determining that the detection signals are greater than the second threshold, the coordinate detection portion 40 determines whether or not the detection positions (coordinates) on the display portion 10 (see Fig. 1) of the detection signals greater than the second threshold are within the prescribed range at a step S13. When determining that the detection positions (coordinates) on the display portion 10 of the detection signals greater than the second threshold are within the prescribed range, the coordinate detection portion 40 recognizes that the detection signals have been obtained from the same object at a step S14. In this case, the coordinate detection portion 40 generates the second regions 72 formed of the pixels corresponding to the detection positions.

When determining that the detection positions (coordinates) on the display portion 10 of the detection signals greater than the second threshold are not within the prescribed range at the step S13, the coordinate detection portion 40 recognizes that the detection signals have been obtained from different objects at a step S15.

After the step S15, the same processing is performed with respect to the first threshold. In other words, the coordinate detection portion 40 determines whether or not the acquired detection signals are greater than the first threshold at a step S16. When determining that the detection signals are not greater than the first threshold, the coordinate detection portion 40 terminates the reflection object detection processing.

When determining that the detection signals are greater than the first threshold, the coordinate detection portion 40 determines whether or not the detection positions (coordinates) on the display portion 10 (see Fig. 1) of the detection signals greater than the first threshold are within the prescribed range at a step S17. When determining that the detection positions (coordinates) on the display portion 10 of the detection signals greater than the first threshold are within the prescribed range, the coordinate detection portion 40 recognizes that the detection signals have been obtained from the same object at a step S18. In this case, the coordinate detection portion 40 generates the first regions 71 of the detection image 70 formed of the pixels corresponding to the detection positions.

When determining that the detection positions (coordinates) on the display portion 10 of the detection signals greater than the first threshold are not within the prescribed range at the step S17, the coordinate detection portion 40 recognizes that the detection signals have been obtained from different objects at a step S19. In this manner, the reflection object detection processing is sequentially performed with respect to each of the detection positions (coordinates) on the display portion 10, and the coordinate detection portion 40 generates the detection image 70 containing the first regions 71 (71a and 71b (see Fig. 5)) and the second regions 72 (72a and 72b (see Fig. 5)). In this first embodiment, the first regions 71a and 71b are recognized as different objects, and the second regions 72a and 72b are recognized as different objects.

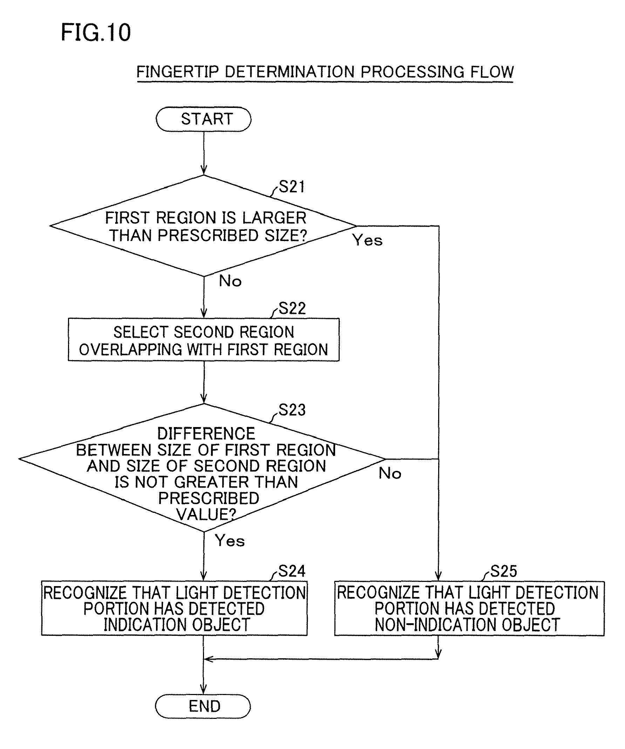

The fingertip determination processing is now described specifically on the basis of a flowchart with reference to Fig. 10.

First, the coordinate detection portion 40 determines whether or not the first regions 71 of the detection image 70 generated by the coordinate detection portion 40 in the reflection object detection processing are larger than the prescribed size at a step S21, as shown in Fig. 10. When determining that any of the first regions 71 is larger than the prescribed size (in the case of the first region 71c in Fig. 7), the coordinate detection portion 40 determines that the light detection portion 30 has detected the non-indication object 63 regardless of the overlapping state of the first region 71 and the second region 72 at a step S25.

When determining that any of the first regions 71 is not larger than the prescribed size at the step S21 (in the case of the first region 71a or 71b in Fig. 5), the coordinate detection portion 40 selects the second region 72 overlapping with the first region 71 at a step S22. Then, the coordinate detection portion 40 determines whether or not the difference between the sizes (short axis diameters) of the first region 71 and the second region 72 of the detection image 70 overlapping with each other is not greater than the prescribed value at a step S23. When determining that the difference between the sizes (short axis diameters) of the first region 71 and the second region 72 of the detection image 70 overlapping with each other is not greater than the prescribed value (in the case of a combination of the first region 71a and the second region 72a), the coordinate detection portion 40 recognizes (determines) that the light detection portion 30 has detected the indication object 61 at a step S24.

When determining that the difference between the sizes (short axis diameters) of the first region 71 and the second region 72 of the detection image 70 overlapping with each other is greater than the prescribed value at the step S23 (in the case of a combination of the first region 71b and the second region 72b), the coordinate detection portion 40 recognizes (determines) that the light detection portion 30 has detected the non-indication object 63 at a step S25. Thus, the coordinate detection portion 40 determines the indication object 61 and the non-indication object 63.

According to the first embodiment, the following effects can be obtained.

According to the first embodiment, as hereinabove described, the image display device 100 is provided with the coordinate detection portion 40 acquiring the detection image 70 containing the first regions 71 where the detected intensity greater than the first threshold is detected and the second regions 72 where the detected intensity greater than the second threshold less than the first threshold is detected on the basis of the detected intensity detected by the light detection portion 30, whereby the first region 71a and the second region 72a corresponding to the size of the user's forefinger can be obtained from the indication object 61, and the first region 71b corresponding to the size of the user's middle finger and the second region 72b corresponding to the size of the user's gripped fist can be obtained from the non-indication object 63. Furthermore, the coordinate detection portion 40 is configured to perform control of determining what the light detection portion 30 has detected the indication object 61 or the non-indication object 63 on the basis of the overlapping state of the first region 71 (71a or 71b) and the second region 72 (72a or 72b) in the detection image 70, whereby the indication object 61 and the non-indication object 63 can be reliably determined by utilizing a difference between the overlapping state of the first region 71a and the second region 72a corresponding to the indication object 61 and the overlapping state of the first region 71b and the second region 72b corresponding to the non-indication object 63. Thus, the detection accuracy of the indication position indicated by the indication object 61 can be improved, and hence malfunction resulting from a reduction in the detection accuracy of the indication position can be prevented.

According to the first embodiment, as hereinabove described, the coordinate detection portion 40 is configured to perform control of acquiring the difference between the size (short axis diameter) of the first region 71 (71a or 71b) and the size (short axis diameter) of the second region 72 (72a or 72b) on the basis of the overlapping state of the first region 71 and the second region 72 in the detection image 70 and determining that the light detection portion 30 has detected the indication object 61 when the acquired difference between the size (short axis diameter) of the first region 71 and the size (short axis diameter) of the second region 72 is not greater than the prescribed value. Thus, the fact that the size of the obtained first region 71b and the size of the obtained second region 72b are significantly different from each other in the non-indication object 63 as the user's gripped fingers and the size of the obtained first region 71a and the size of the obtained second region 72a are not significantly different from each other in the indication object 61 as the user's forefinger (the difference between the size of the first region 71a and the size of the second region 72a is not greater than the prescribed value) can be utilized to reliably recognize the indication object 61. Thus, an operation intended by the user can be reliably executed.

According to the first embodiment, as hereinabove described, the coordinate detection portion 40 is configured to perform control of determining that the light detection portion 30 has detected the non-indication object 63 when the acquired difference between the size of the first region 71 (71a or 71b) and the size of the second region 72 (72a or 72b) is greater than the prescribed value. Thus, in addition to the indication object 61, the non-indication object 63 can be recognized. Consequently, various operations can be performed according to whether the recognized object is the indication object 61 or the object other than the indication object 61.

According to the first embodiment, as hereinabove described, the size of the first region 71 (71a or 71b) and the size of the second region 72 (72a or 72b) are the sizes of the short axis diameters of the first region and the second region or the sizes of the long axis diameters of the first region and the second region in the case where the first region 71 (71a or 71b) and the second region 72 (72a or 72b) are nearly ellipsoidal or the size of the area of the first region 71 (71a or 71b) and the size of the area of the second region 72 (72a or 72b). Thus, the difference between the size of the first region 71 (71a or 71b) and the size of the second region 72 (72a or 72b) or the ratio of the size of the second region 72 (72a or 72b) to the size of the first region 71 (71a or 71b) can be easily acquired.

According to the first embodiment, as hereinabove described, the size of the first region 71 (71a or 71b) and the size of the second region 72 (72a or 72b) are the sizes of the short axis diameters of the first region and the second region in the case where the first region 71 (71a or 71b) and the second region 72 (72a or 72b) are nearly ellipsoidal. With respect to the indication object 61 as the user's finger, the widths (the widths in short-side directions) are conceivably acquired as the sizes of the short axis diameters. Therefore, according to the aforementioned structure, variations in the size of the short axis diameter D1a of the obtained first region 71a and the size of the short axis diameter D2a of the obtained second region 72a can be suppressed unlike the case where the sizes of the long axis diameters are employed with respect to the indication object 61 as the user's finger. Consequently, the indication object 61 can be easily recognized.

According to the first embodiment, as hereinabove described, the projection image is projected by the projection portion 20 from the side (Z2 side) opposite to the side on which indication is performed by the indication object 61 toward the indication object 61. Thus, light can be easily reflected by the indication object 61 coming close in a light emission direction, and hence the detection image 70 containing the first region 71 (71a or 71b) and the second region 72 (72a or 72b) can be easily acquired.

According to the first embodiment, as hereinabove described, the coordinate detection portion 40 is configured to perform control of acquiring the indication position indicated by the indication object 61 on the basis of the first region 71a corresponding to the detected indication object 61 when determining that the light detection portion 30 has detected the indication object 61. Thus, the indication position indicated by the indication object 61, intended by the user can be reliably detected, and hence an operation on the icon 80 intended by the user can be properly executed when the user clicks or drags the icon 80 of the image projected on the display portion 10.

According to the first embodiment, as hereinabove described, the coordinate detection portion 40 is configured to perform control of invalidating the detection signal (acquired central coordinates) related to the detected non-indication object 63 when determining that the light detection portion 30 has detected the non-indication object 63. Thus, detection of the indication position indicated by the non-indication object 63, not intended by the user can be suppressed.

According to the first embodiment, as hereinabove described, the coordinate detection portion 40 is configured to perform control of determining that the light detection portion 30 has detected the non-indication object 63 regardless of the overlapping state of the first region 71 and the second region 72 when the size of the acquired first region 71 (71c) is larger than the prescribed size. Thus, when the first region 71c significantly larger than the size of the first region 71a obtained from the indication object 61 as the user's forefinger is obtained (when the size of the first region is larger than the prescribed size), the indication object 61 and the non-indication object 63 can be reliably determined by determining that the light detection portion 30 has detected the non-indication object 63.

According to the first embodiment, as hereinabove described, the image display device 100 is provided with the projection portion 20 projecting the projection image and the display portion 10 on which the projection image is projected by the projection portion 20. Furthermore, the light detection portion 30 is configured to detect the light (the light forming the projection image doubling as the light for detection) emitted to the display portion 10 by the projection portion 20, reflected by the indication object 61 and the non-indication object 63. Thus, the light detection portion 30 can detect the light emitted to the display portion 10 by the projection portion 20, and hence no projection portion configured to emit the light for detection may be provided separately from the projection portion 20 projecting the projection image for operation. Therefore, an increase in the number of components in the image display device 100 can be suppressed.

### (Second Embodiment)

A second embodiment is now described with reference to Figs. 1, 3, and 11 to 13. In this second embodiment, in addition to the aforementioned fingertip determination processing according to the first embodiment, hand determination processing for determining the orientations P (Pa and Pb) of the palms of indication objects 161 (161a and 161b) when a plurality of (two) indication objects 161 (161a and 161b) are detected and determining whether or not an operation has been performed by the same hand on the basis of the determined orientations P (Pa and Pb) of the palms is performed. The indication objects 161a and 161b are examples of the "first user's finger" and the "second user's hand" in the present invention, respectively. The orientations Pa and Pb of the palms are examples of the "first orientation of the palm" and the "second orientation of the palm" in the present invention, respectively.

An image display device 200 includes a coordinate detection portion 140, as shown in Figs. 1 and 3. Portions identical to those in the aforementioned first embodiment shown in Figs. 1 and 3 are denoted by the same reference numerals, to omit the description. The coordinate detection portion 140 is an example of the "control portion" in the present invention.

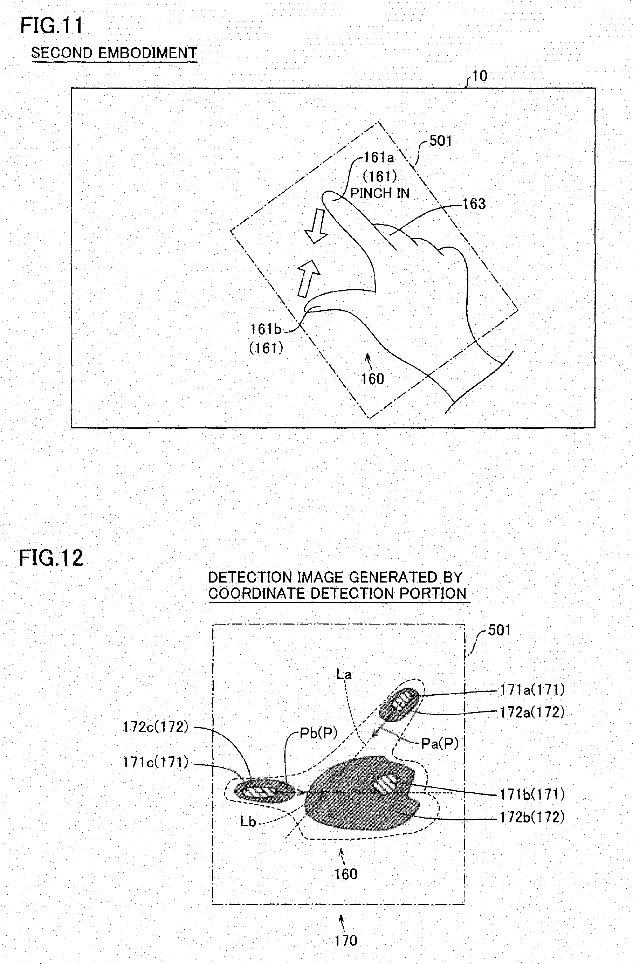

According to the second embodiment, the coordinate detection portion 140 is configured to acquire the orientations P (see Fig. 12) of the palms in the extensional directions of portions of second regions 172 not overlapping with first regions 171 from the first regions 171 on the basis of the first regions 171 (see Fig. 12) and the second regions 172 (see Fig. 12) corresponding to the detected indication objects 161 when determining that a light detection portion 30 has detected the indication objects 161 (see Fig. 11) on the basis of reflection object detection processing and fingertip determination processing similar to those in the aforementioned first embodiment. The coordinate detection portion 140 is configured to perform control of determining whether or not an operation has been performed by the same hand on the basis of the orientations Pa and Pb of the palms of the indication objects 161a and 161b when the plurality of (two) indication objects 161 (161a and 161b) are detected. This control of determining whether or not an operation has been performed by the same hand is described later in detail.

Acquisition of the orientations P of the palms performed by the coordinate detection portion 140 is now described with reference to Figs. 1, 11, and 12. An example in which the coordinate detection portion 140 generates a detection image 170 corresponding to a user's hand 160 and acquires the orientations Pa and Pb of the palms in the detection image 170 when a user pinches in a projection image projected on a display portion 10 is described here.

Fig. 11 shows the case where the user pinches in the projection image on the display portion 10 to enlarge the projection image with the indication object 161a (user's forefinger) and the indication object 161b (user's thumb). In this case, the light detection portion 30 detects the indication object 161a and the indication object 161b for a pinch-in operation and a non-indication object 163 (a user's middle finger in Fig. 11) as a gripped finger other than the user's forefinger and thumb. The user's middle finger as the non-indication object 163 is an example of the "object other than the indication object" in the present invention.

Fig. 12 shows the detection image 170 (an image of the user's hand 160 including the indication objects 161a and 161b and the non-indication object 163) generated by the coordinate detection portion 140 on the basis of the detected intensity of reflected light detected by the light detection portion 30. The detection image 170 in Fig. 12 is a detection image of the user's hand 160 at the position of a frame border 501 (shown by a one-dot chain line) in Fig. 11. In Fig. 12, a figure corresponding to the user's hand 160 is shown by a broken line for ease of understanding.

The detection image 170 includes a first region 171a and a second region 172a obtained from the indication object 161a, a first region 171c and a second region 172c obtained from the indication object 161b, and a first region 171b and a second region 172b obtained from the non-indication object 163, as shown in Fig. 12. Specifically, in the detection image 170, a first region 171 (171a or 171c) and a second region 172 (172a or 172c) obtained from an indication object 161 (161a or 161b) overlap with each other, and the first region 171b and the second region 172b obtained from the non-indication object 163 overlap with each other. More specifically, in the detection image 170, the first region 171a and the second region 172a in a size corresponding to the size of the user's forefinger are obtained from the indication object 161a, and the first region 171c and the second region 172c in a size corresponding to the size of the user's thumb are obtained from the indication object 161b. Furthermore, in the detection image 170, the first region 171b in a size corresponding to the size of the user's middle finger and the second region 172b in a size corresponding to the size of user's gripped fingers (fist) are obtained from the non-indication object 163.

Also according to this second embodiment, the fact that the sizes (short axis diameters) of the first regions 171 and the second regions 172 overlapping with each other corresponding to the indication objects 161 (161a and 161b) are different from the sizes (short axis diameters) of the first region 171 and the second region 172 overlapping with each other corresponding to the non-indication object 163 is utilized to determine the indication objects 161 and the non-indication object 163, similarly to the aforementioned first embodiment.

According to the second embodiment, the coordinate detection portion 140 acquires the orientation Pa of the palm of the indication object 161a and the orientation Pb of the palm of the indication object 161b, as shown in Fig. 12. The coordinate detection portion 140 acquires these orientations P (Pa and Pb) of the palms by utilizing the fact that the indication objects 161 are detected as regions in which portions of the second regions 172 (172a and 172c) not overlapping with the first regions 171 (171a and 171c) extend in the base directions (i.e., directions toward the palms) of user's fingers. As a method for determining these orientations P of the palms, directions from the central coordinates of the first regions 171 calculated by the coordinate detection portion 140 toward the central coordinates of the second regions 172 calculated by the coordinate detection portion 140 may be determined to be the orientations of the palms, for example, or another method for determining the orientations P may be employed.

According to the second embodiment, the coordinate detection portion 140 determines whether or not the indication object 161a and the indication object 161b are parts of the same hand performing an operation on the basis of the orientations Pa and Pb of the palms (hand determination processing). Specifically, the coordinate detection portion 140 determines that the indication object 161a and the indication object 161b are the parts of the same hand when a line segment La extending in the orientation Pa of the palm from the first region 171a and a line segment Lb extending in the orientation Pb of the palm from the first region 171c intersect with each other. Therefore, in the user's hand 160 shown in Fig. 12, the indication object 161a and the indication object 161b are determined to be the parts of the same hand and are recognized individually.

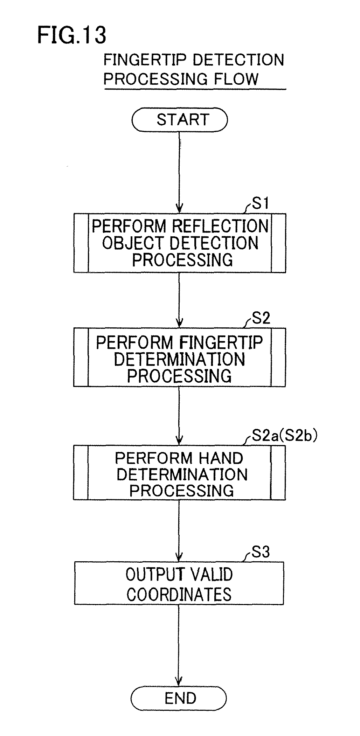

In fingertip detection processing according to the second embodiment, the coordinate detection portion 140 performs the hand determination processing for determining whether or not the indication object 161a and the indication object 161b are the parts of the same hand at a step S2a after performing fingertip determination processing at a step S2, as shown in Fig. 13. Processing steps identical to those in the aforementioned first embodiment shown in Fig. 8 are denoted by the same reference numerals, to omit the description.

The remaining structure of the image display device 200 according to the second embodiment is similar to that of the image display device 100 according to the aforementioned first embodiment.

According to the second embodiment, the following effects can be obtained.

According to the second embodiment, as hereinabove described, the image display device 200 is provided with the coordinate detection portion 140 acquiring the detection image 170 containing the first regions 171 and the second regions 172, whereby a difference between the overlapping state of the first region 171a (171c) and the second region 172a (172c) corresponding to the indication object 161a (161b) and the overlapping state of the first region 171b and the second region 172b corresponding to the non-indication object 163 can be utilized to determine the indication object 161 and the non-indication object 163, similarly to the first embodiment.

According to the second embodiment, as hereinabove described, the coordinate detection portion 140 is configured to recognize the plurality of indication objects 161a and 161b individually on the basis of the overlapping states of the first regions 171 and the second regions 172 in the detection image 170 when there are the plurality of indication objects. Thus, the plurality of indication objects 161a and 161b are recognized individually, and hence processing based on an operation (a pinch-in operation or a pinch-out operation, for example) performed by the plurality of indication objects 161a and 161b can be reliably executed.

According to the second embodiment, as hereinabove described, the coordinate detection portion 140 is configured to acquire the orientations P (Pa and Pb) of the palms in the extensional directions of the portions of the second regions 172a and 172c not overlapping with the first regions 171a and 171c from the first regions 171a and 171c, respectively, on the basis of the first regions 171a and 171c and the second regions 172a and 172c corresponding to the detected user's fingers when determining that the light detection portion 30 has detected the indication objects 161a and 161b as the user's forefinger and thumb. Thus, whether or not a plurality of (two) fingers are parts of the same hand can be determined by checking the orientations P of the palms corresponding to the plurality of (two) fingers when the plurality of (two) fingers are detected as the indication objects 161a and 161b. Therefore, an image operation performed by the plurality of fingers can be properly executed.

According to the second embodiment, as hereinabove described, the coordinate detection portion 140 is configured to perform control of acquiring the orientation Pa of the palm corresponding to the indication object 161a and the orientation Pb of the palm corresponding to the indication object 161b and determining that the indication object 161a and the indication object 161b are the parts of the same hand when the line segment La extending in the orientation Pa of the palm from the first region 171a and the line segment Lb extending in the orientation Pb of the palm from the first region 171c intersect with each other. Thus, the fact that fingers in which the line segments (La and Lb) extending in the orientations P of the palms intersect with each other are parts of the same hand can be utilized to easily determine that the indication object 161a and the indication object 161b are the parts of the same hand. Furthermore, a special operation performed by the same hand, such as a pinch-in operation of reducing the projection image displayed on the display portion 10, as shown in Fig. 11 or a pinch-out operation (not shown) of enlarging the projection image can be reliably executed on the basis of an operation performed by the indication object 161a and an operation performed by the indication object 161b, determined to be the parts of the same hand.

The remaining effects of the second embodiment are similar to those of the aforementioned first embodiment.

### (Third Embodiment)

A third embodiment is now described with reference to Figs. 1, 3, and 13 to 16. In this third embodiment, in addition to the structure of the aforementioned second embodiment in which whether or not the indication object 161a and the indication object 161b are the parts of the same hand is determined on the basis of the orientations P (Pa and Pb) of the palms, whether or not an indication object 261a and an indication object 261b are parts of different hands is determined on the basis of the orientations P (Pc and Pd) of the palms. The indication objects 261a and 261b are examples of the "first user's finger" and the "second user's finger" in the present invention, respectively. The orientations Pc and Pd of the palms are examples of the "first orientation of the palm" and the "second orientation of the palm" in the present invention, respectively.

An image display device 300 includes a coordinate detection portion 240, as shown in Figs. 1 and 3. Portions identical to those in the aforementioned first and second embodiments shown in Figs. 1 and 3 are denoted by the same reference numerals, to omit the description. The coordinate detection portion 240 is an example of the "control portion" in the present invention.

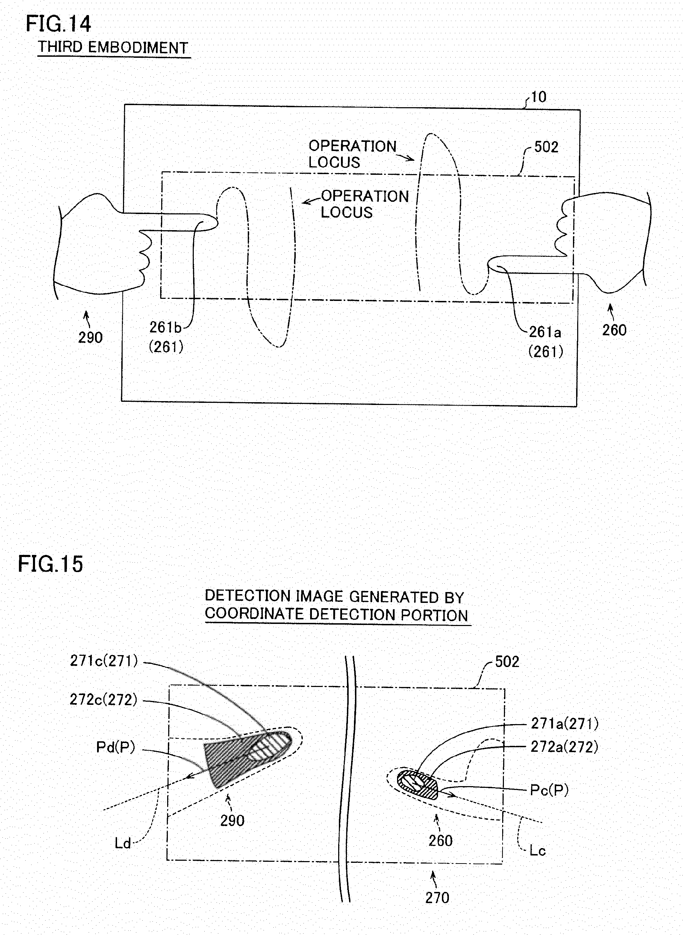

According to the third embodiment, the coordinate detection portion 240 is configured to acquire the orientations P (see Fig. 15) of the palms on the basis of first regions 271 (see Fig. 15) and second regions 272 (see Fig. 15) corresponding to indication objects 261 detected similarly to the aforementioned second embodiment when determining that a light detection portion 30 has detected the indication objects 261 (see Fig. 14) on the basis of reflection object detection processing and fingertip determination processing similar to those in the aforementioned first embodiment. Furthermore, the coordinate detection portion 240 is configured to perform control of determining whether an operation has been performed by the same hand or the different hands on the basis of the orientations Pc and Pd of the palms of the indication objects 261a and 261b when a plurality of (two) indication objects 261 (261a and 261b) are detected. This control of determining whether an operation has been performed by the different hands is described later in detail.

The control of determining whether an operation has been performed by the different hands, performed by the coordinate detection portion 240 is now described with reference to Figs. 1, 14, ad 15. Processing for acquiring the orientations of the palms and processing for determining whether an operation has been performed by the same hand are similar to those in the aforementioned second embodiment.

Fig. 14 shows the case where the indication object (user's finger) 261a of a user's hand 260 and the indication object (user's finger) 261b of a user's hand 290 different from the user's hand 260 operate a projection image on a display portion 10 (see Fig. 1) separately. The user's hand 260 and the user's hand 290 may be parts of the same user or parts of different users. In this case, the light detection portion 30 detects the indication object 261a and the indication object 261b.

Fig. 15 shows a detection image 270 (an image of the user's hand 260 including the indication object 261a and an image of the user's hand 290 including the indication object 261b) generated by the coordinate detection portion 240 on the basis of the detected intensity of reflected light detected by the light detection portion 30. The detection image 270 in Fig. 15 is a detection image of the user's hands 260 and 290 at the position of a frame border 502 (shown by a one-dot chain line) in Fig. 14. In Fig. 15, figures corresponding to the user's hands 260 and 290 are shown by broken lines for ease of understanding.

The detection image 270 includes a first region 271a and a second region 272a obtained from the indication object 261a and a first region 271c and a second region 272c obtained from the indication object 261b, as shown in Fig. 15. Specifically, in the detection image 270, a first region 271 (271a or 271c) and a second region 272 (272a or 272c) obtained from an indication object 261 (261a or 261b) overlap with each other. According to this third embodiment, a non-indication object corresponding to a user's gripped finger is outside a detection range detected by the light detection portion 30 (outside a scanning range of laser light scanned by a projection portion 20), and hence no non-indication object is detected.

However, also according to this third embodiment, the fact that the sizes (short axis diameters) of the first regions 271 and the second regions 272 overlapping with each other corresponding to the indication objects 261 (261a and 261b) are different from the sizes (short axis diameters) of a first region and a second region overlapping with each other corresponding to the non-indication object can be utilized to determine the indication objects 261 and the non-indication object, similarly to the aforementioned first and second embodiments.

According to the third embodiment, the coordinate detection portion 240 determines whether the indication object 261a and the indication object 261b are parts of the same hand or the parts of the different hands on the basis of the orientation Pc of the palm and the orientation Pd of the palm (hand determination processing). Specifically, the coordinate detection portion 240 determines that the indication object 261a and the indication object 261b are the parts of the same hand when a line segment Lc extending in the orientation Pc of the palm from the first region 271a and a line segment Ld extending in the orientation Pd of the palm from the first region 271c intersect with each other. The coordinate detection portion 240 determines that the indication object 261a and the indication object 261b are the parts of the different hands when the line segment Lc extending in the orientation Pc of the palm from the first region 271a and the line segment Ld extending in the orientation Pd of the palm from the first region 271c do not intersect with each other. Therefore, in Fig. 15, the line segment Lc extending in the orientation Pc of the palm and the line segment Ld extending in the orientation Pd of the palm do not intersect with each other, and hence the coordinate detection portion 240 determines that the indication object 261a and the indication object 261b are the parts of the different hands.

The hand determination processing according to the third embodiment is now described on the basis of a flowchart with reference to Figs. 1, 13, 15, and 16.

In fingertip detection processing according to the third embedment, the coordinate detection portion 240 (see Fig. 1) performs the hand determination processing for determining whether the indication object 261a (see Fig. 14) and the indication object 261b (see Fig. 14) are the parts of the same hand or the parts of the different hands at a step S2b after performing the fingertip determination processing at a step S2, as shown in Fig. 13. Processing steps identical to those in the aforementioned first embodiment shown in Fig. 8 are denoted by the same reference numerals, to omit the description.

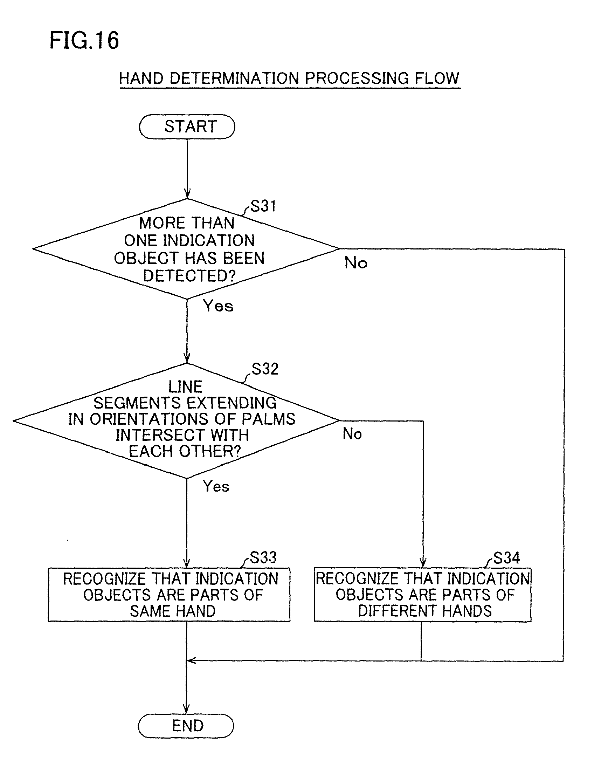

Specifically, the coordinate detection portion 240 determines whether or not more than one indication object has been detected at a step S31 as in the flowchart of the hand determination processing shown in Fig. 16. When determining that more than one indication object has not been detected, the coordinate detection portion 240 terminates the hand determination processing.

When determining that more than one indication object has been detected at the step S31, the coordinate detection portion 240 determines whether or not the line segments Lc and Ld extending in the orientations Pc and Pd (see Fig. 15) of the palms, respectively, intersect with each other on the basis of the orientations Pc and Pd (see Fig. 15) of the palms at a step S32. When determining that the line segment Lc extending in the orientation Pc of the palm and the line segment Ld extending in the orientation Pd of the palm intersect with each other, the coordinate detection portion 240 determines that the indication object (user's finger) 261a (see Fig. 14) and the indication object (user's finger) 261b (see Fig. 14) are the parts of the same hand at a step S33. When determining that the line segment Lc extending in the orientation Pc of the palm and the line segment Ld extending in the orientation Pd of the palm do not intersect with each other, the coordinate detection portion 240 determines that the indication object 261a and the indication object 261b are the parts of the different hands at a step S34. Thus, processing corresponding to the case of an operation performed by the same hand and processing corresponding to the case of an operation performed by the different hands are performed, whereby an operation intended by a user is executed.

The remaining structure of the image display device 300 according to the third embodiment is similar to that of the image display device 200 according to the aforementioned second embodiment.

According to the third embodiment, the following effects can be obtained.

According to the third embodiment, as hereinabove described, the image display device 300 is provided with the coordinate detection portion 240 acquiring the detection image 270 containing the first regions 271 and the second regions 272, whereby a difference between the overlapping state of the first region 271a (271c) and the second region 272a (272c) corresponding to the indication object 261a (261b) and the overlapping state of the first region and the second region corresponding to the non-indication object can be utilized to determine the indication object 261 and the non-indication object, similarly to the first and second embodiments.

According to the third embodiment, as hereinabove described, the coordinate detection portion 240 is configured to acquire the orientations P of the palms in the extensional directions of the portions of the second regions 272a and 272c not overlapping with the first regions 271a and 271c from the first regions 271a and 271c, respectively, on the basis of the first regions 271a and 271c and the second regions 272a and 272c corresponding to the detected user's fingers when determining that the light detection portion 30 has detected the indication objects 261a and 261b as the user's fingers. Thus, when a plurality of (two) fingers are detected as the indication objects 261a and 261b, whether the plurality of fingers are the parts of the same hand or the parts of the different hands can be determined by checking the orientations P of the palms corresponding to the plurality of (two) fingers. Therefore, an image operation performed by the plurality of fingers can be properly executed according to the case of the same hand and the case of the different hands.

According to the third embodiment, as hereinabove described, the coordinate detection portion 240 is configured to perform control of acquiring the orientation Pc of the palm corresponding to the indication object 261a and the orientation Pd of the palm corresponding to the indication object 261b different from the indication object 261a and determining that the indication object 261a and the indication object 261b are the parts of the different hands when the line segment Lc extending in the orientation Pc of the palm and the line segment Ld extending in the orientation Pd of the palm do not intersect with each other. Thus, the fact that fingers in which the line segments (Lc and Ld) extending in the orientations P (Pc and Pd) of the palms do not intersect with each other are parts of different hands can be utilized to easily determine that the indication object 261a and the indication object 261b are the parts of the different hands when a plurality of users operate one image or when a single user operates one image with his/her different fingers. Consequently, an operation intended by the user can be reliably executed.

The remaining effects of the third embodiment are similar to those of the aforementioned second embodiment.

### (Fourth Embodiment)

A fourth embodiment is now described with reference to Figs. 3, 17, and 18. In this fourth embodiment, an optical image 381 as a projection image is formed in the air, and this optical image 381 is operated by a user's hand 360, unlike the aforementioned first to third embodiments in which the projection image projected on the display portion 10 is operated by the user's hand 60 (160, 260).

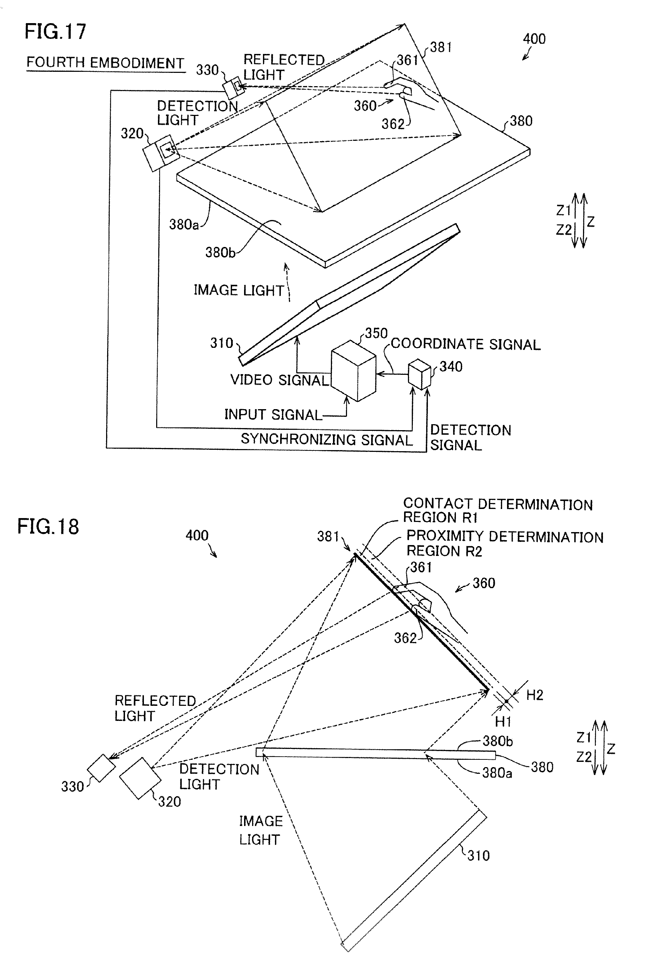

An image display device 400 includes a display portion 310 as an image light source portion configured to emit image light forming a projection image and an optical image forming member 380 to which the image light forming the projection image is emitted from the side (Z2 side) of a rear surface 380a, forming the optical image 381 (the content of the image is not shown) corresponding to the projection image in the air on the side (Z1 side) of a front surface 380b, as shown in Fig. 17. The image display device 400 also includes a detection light source portion 320 emitting laser light for detection (detection light) to the optical image 381, a light detection portion 330 detecting the laser light for detection emitted to the optical image 381, which is reflected light reflected by a user's finger or the like, a coordinate detection portion 340 calculating an indication position indicated by a user in the optical image 381 as coordinates on the basis of the detected intensity of the reflected light detected by the light detection portion 330, and an image processing portion 350 outputting a video signal containing the projection image projected in the air as the optical image 381 to the display portion 310. The coordinate detection portion 340 is an example of the "control portion" in the present invention.

The display portion 310 is constituted by an unshown liquid crystal panel and an unshown image light source portion. The display portion 310 is arranged on the side (Z2 side) of the rear surface 380a of the optical image forming member 380 to be capable of emitting the image light forming the projection image to the optical image forming member 380 on the basis of the video signal input from the image processing portion 350.

The optical image forming member 380 is configured to image the image light forming the projection image, emitted from the side (Z2 side) of the rear surface 380a as the optical image 381 in the air on the side (Z1 side) of the front surface 380b. Specifically, the optical image forming member 380 is formed with a plurality of unshown substantially rectangular through-holes in a plan view, and two surfaces, which are orthogonal to each other, of inner wall surfaces of each of the plurality of through-holes are formed as mirror surfaces. Thus, in the optical image forming member 380, dihedral corner reflector arrays are formed by the plurality of unshown through-holes, and the optical image forming member 380 is configured to image the image light forming the projection image, emitted from the side (Z2 side) of the rear surface 380a as the optical image 381 in the air on the side (Z1 side) of the front surface 380b.

The detection light source portion 320 is configured to emit the laser light for detection to the optical image 381. Specifically, the detection light source portion 320 is configured to be capable of vertically and horizontally scanning the laser light for detection on the optical image 381. Furthermore, the detection light source portion 320 is configured to emit laser light having an infrared wavelength suitable for detection of the user's finger or the like. In addition, the detection light source portion 320 is configured to output a synchronizing signal containing information about the timing of emitting the laser light for detection to the coordinate detection portion 340.

The light detection portion 330 is configured to detect the reflected light obtained by reflecting the laser light for detection, which is emitted to the optical image 381 by the detection light source portion 320, by the user's finger or the like. Specifically, the light detection portion 330 is configured to be capable of detecting light reflected in a contact determination region R1 (see Fig. 18) and a proximity determination region R2 (see Fig. 18) separated by prescribed heights H1 and H2, respectively, from the optical image 381. Furthermore, the light detection portion 330 is configured to output a detection signal to the coordinate detection portion 340 according to the detected intensity of the detected reflected light.

The coordinate detection portion 340 is configured to generate a detection image corresponding to a detection object (the user's hand 360 including an indication object 361 and a non-indication object 362) detected in the vicinity of the optical image 381 on the basis of the detected intensity of the reflected light detected by the light detection portion 330 and the timing of detecting the reflected light, as shown in Figs. 3 and 17. Specifically, the coordinate detection portion 340 is configured to generate a detection image containing first regions where the detected intensity greater than a first threshold is detected and second regions where the detected intensity greater than a second threshold less than the first threshold is detected, similarly to the aforementioned first to third embodiments. Portions identical to those in the aforementioned first to third embodiments shown in Fig. 3 are denoted by the same reference numerals, to omit the description.

The image processing portion 350 is configured to output the video signal containing the projection image according to an input signal from an external device such as a PC and a coordinate signal from the coordinate detection portion 340 to the display portion 310, as shown in Fig. 17.

An operation on the optical image 381 performed by the user's hand 360 is now described with reference to Figs. 17 and 18. The case where the user performs an operation of indicating the projection image projected in the air as the optical image 381 is shown here.

Fig. 18 shows a state where the user's hand 360 comes close to the optical image 381 and the indication object 361 (user's forefinger) and the non-indication object 362 (user's thumb) are in contact with the optical image 381. Also in this case, the light detection portion 330 detects the indication object 361 and the non-indication object 362 as a gripped finger. The coordinate detection portion 340 (see Fig. 17) generates the detection image containing the first regions and the second regions corresponding to the indication object 361 and the non-indication object 362 (as in Figs. 5, 7, 12, and 15) on the basis of the detected intensity of the reflected light detected by the light detection portion 330. The user's thumb as the non-indication object 362 is an example of the "object other than the indication object" in the present invention.

Also according to this fourth embodiment, the fact that the sizes (short axis diameters) of a first region and a second region overlapping with each other corresponding to the indication object 361 are different from the sizes (short axis diameters) of a first region and a second region overlapping with each other corresponding to the non-indication object 362 can be utilized to determine the indication object 361 and the non-indication object 362, similarly to the first to third embodiments. Furthermore, when the light detection portion 330 detects a plurality of indication objects, the coordinate detection portion 340 acquires the orientations of palms corresponding to the plurality of indication objects and can determine whether an operation has been performed by the same hand or difference hands on the basis of the acquired orientations of the palms. In other words, the coordinate detection portion 340 executes reflection object detection processing, fingertip determination processing, fingertip detection processing, and hand determination processing on the basis of the flowcharts shown in Figs. 9, 10, 13, and 16. Thus, also in the case of the image display device 400 in which the user operates the optical image 381 formed in the air, as in this fourth embodiment, an operation intended by the user is reliably executed.

The remaining structure of the image display device 400 according to the fourth embodiment is similar to that of the image display device according to each of the aforementioned first to third embodiments.

According to the fourth embodiment, the following effects can be obtained.

According to the fourth embodiment, as hereinabove described, the image display device 400 is provided with the coordinate detection portion 340 acquiring the detection image containing the first regions and the second regions, whereby a difference between the overlapping state of the first region and the second region corresponding to the indication object 361 and the overlapping state of the first region and the second region corresponding to the non-indication object 362 can be utilized to determine the indication object 361 and the non-indication object 362, similarly to the first to third embodiments.

According to the fourth embodiment, as hereinabove described, the image display device 400 is provided with the optical image forming member 380 to which the image light forming the projection image is emitted from the side (Z2 side) of the rear surface 380a by the display portion 310, configured to form the optical image 381 (the content of the image is not shown) corresponding to the projection image in the air on the side (Z1 side) of the front surface 380b. Furthermore, the light detection portion 330 is configured to detect the light emitted to the optical image 381 by the detection light source portion 320, reflected by the indication object 361 and the non-indication object 362. Thus, unlike the case where the projection image is projected on the display portion which is a physical entity, the user can operate the optical image 381 formed in the air which is not a physical entity, and hence no fingerprint (oil) or the like of the user's finger is left on the display portion. Therefore, difficulty in viewing the projection image can be suppressed. When the user operates the optical image 381 formed in the air which is not a physical entity, the indication object such as the user's finger and the optical image 381 may be so close to each other as to be partially almost coplanar with each other. In this case, it is very effective from a practical perspective that the indication object 361 and the non-indication object 362 detected by the light detection portion 330 can be determined.

The remaining effects of the fourth embodiment are similar to those of the aforementioned first to third embodiments.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

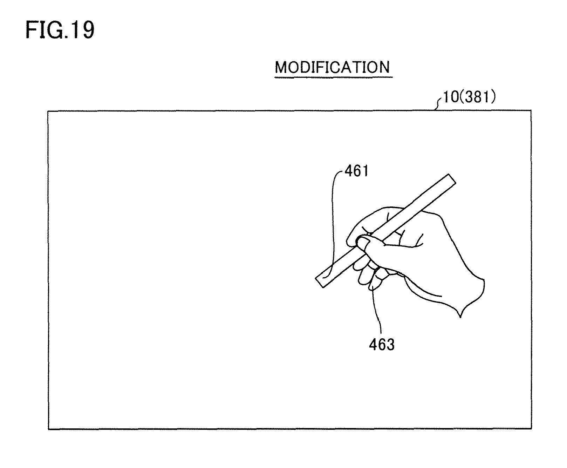

For example, while the light detection portion 30 (330) detects the user's forefinger (thumb) as the indication object 61 (161a, 161b, 261a, 261b, 361) in each of the aforementioned first to fourth embodiments, the present invention is not restricted to this. According to the present invention, a touch pen may alternatively be employed as an indication object 461 as in a modification shown in Fig. 19. In this case, a light detection portion detects the indication object 461 and also detects a non-indication object 463 (a user's little finger in Fig. 19) as a gripped finger since the finger gripped to grip the touch open also comes close to a display portion 10 (optical image 381). Also in this case, a coordinate detection portion can determine the indication object 461 and the non-indication object 463 by utilizing the fact that the sizes (short axis diameters) of a first region and a second region overlapping with each other corresponding to the indication object 461 as the touch pen are different from the sizes (short axis diameters) of a first region and a second region overlapping with each other corresponding to the non-indication object 463 as the user's little finger. The user's little finger as the non-indication object 463 is an example of the "object other than the indication object" in the present invention.

While the coordinate detection portion 40 (140, 240, 340) determines that the light detection portion 30 (330) has detected the indication object 61 (161a, 161b, 261a, 261b, 361) when the difference between the size (short axis diameter) of the first region 71 (171, 271) and the second region 72 (172, 272) overlapping with each other is not greater than the prescribed value in each of the aforementioned first to fourth embodiments, the present invention is not restricted to this. According to the present invention, the coordinate detection portion may alternatively determine that the light detection portion has detected the indication object when the ratio of the size (short axis diameter) of the second region to the size (short axis diameter) of the first region overlapping with the second region is not greater than the prescribed value. Furthermore, the coordinate detection portion may alternatively determine that the light detection portion has detected the non-indication object when the ratio of the size (short axis diameter) of the second region to the size (short axis diameter) of the first region overlapping with the second region is not greater than the prescribed value. The prescribed value is an example of the "second value" in the present invention.

While the coordinate detection portion 40 (140, 240, 340) determines that the light detection portion 30 (330) has detected the non-indication object 63 (163, 362) when the difference between the sizes (short axis diameters) of the first region 71 (171, 271) and the second region 72 (172, 272) overlapping with each other is greater than the prescribed value and performs control of invalidating the central coordinates of the first region 71 (171, 271) in each of the aforementioned first to fourth embodiments, the present invention is not restricted to this. According to the present invention, the coordinate detection portion may alternatively determine that the light detection portion has detected the gripped finger, for example, without invalidating the central coordinates of the first region when the difference between the sizes (short axis diameters) of the first region and the second region overlapping with each other is greater than the prescribed value. Thus, the coordinate detection portion can perform an operation (processing) corresponding to the gripped finger.

While the coordinate detection portion 140 (240) determines whether an operation has been performed by the same hand or the different hands on the basis of the orientations Pa (Pc) and Pb (Pd) of the palms of the indication objects 161a (261a) and 161b (261b) in each of the aforementioned second and third embodiments, the present invention is not restricted to this. According to the present invention, the coordinate detection portion may alternatively determine that the light detection portion has detected the non-indication object such as the gripped finger on the basis of the orientations P of the palms of the indication objects when the coordinate detection portion acquires the orientations P of the palms of the indication objects.

While the display portion 10 has the curved projection surface in each of the aforementioned first to third embodiments, the present invention is not restricted to this. According to the present invention, the display portion may alternatively have a projection surface in a shape other than a curved surface shape. For example, the display portion may have a flat projection surface.

While the coordinate detection portion 40 (140, 240, 340) determines what the light detection portion 30 (330) has detected the indication object 61 (161a, 161b, 261a, 261b, 361) or the non-indication object 63 (163, 362) on the basis of the difference between the sizes (short axis diameters) of the first region 71 (171, 271) and the second region 72 (172, 272) overlapping with each other in each of the aforementioned first to fourth embodiments, the present invention is not restricted to this. According to the present invention, the coordinate detection portion may alternatively determine what the light detection portion has detected the indication object or the non-indication object on the basis of only the size of the second region of the first region and the second region overlapping with each other.

While the projection portion 20 includes the three (blue (B), green (G), and red (R)) laser light sources 21 in each of the aforementioned first to third embodiments, the present invention is not restricted to this. According to the present invention, the projection portion may alternatively include a light source in addition to the three (blue (B), green (G), and red (R)) laser light sources. For example, the projection portion may further include a laser light source capable of emitting infrared light. In this case, the light detection portion can more accurately detect the indication object and the non-indication object by employing the infrared light suitable for detection of the user's hand or the like as the light for detection of the indication object and the non-indication object.

While the projection portion 20 emits not only the laser light forming the projection image for operation but also the laser light for detection in each of the aforementioned first to third embodiments, the present invention is not restricted to this. According to the present invention, a projection portion (light source portion) emitting the laser light for detection may alternatively be provided separately from the projection portion emitting the laser light forming the projection image for operation.

While the light detection portion 30 detects the plurality of indication objects 161a (261a) and 161b (261b) in each of the aforementioned second and third embodiments, the present invention is not restricted to this. According to the present invention, the light detection portion may alternatively detect three or more indication objects. Also in this case, the coordinate detection portion can determine whether the indication objects are parts of the same hand or parts of different hands by acquiring the orientations of the palms of the indication objects.

While the processing operations performed by the coordinate detection portion 40 (140, 240, 340) according to the present invention are described, using the flowcharts described in a flow-driven manner in which processing is performed in order along a processing flow for the convenience of illustration in each of the aforementioned first to fourth embodiments, the present invention is not restricted to this. According to the present invention, the processing operations performed by the coordinate detection portion 40 (140, 240, 340) may be performed in an event-driven manner in which processing is performed on an event basis. In this case, the processing operations performed by the coordinate detection portion may be performed in a complete event-driven manner or in a combination of an event-driven manner and a flow-driven manner.

## Claims

1. An image display device (100, 200, 300, 400) comprising:
a light detection portion (30, 330) detecting light reflected by an indication object (61, 161, 261, 361, 461) and an object other than the indication object (62, 63, 163, 362, 463) in a vicinity of a projection image; and
a control portion (40, 140, 240, 340) acquiring a detection image (70, 170, 270) containing a first region (71, 171, 271) where intensity greater than a first threshold is detected and a second region (72, 172, 272) where intensity greater than a second threshold less than the first threshold is detected on the basis of detected intensity detected by the light detection portion,
the control portion configured to perform control of determining what the light detection portion has detected the indication object or the object other than the indication object on the basis of an overlapping state of the first region and the second region in the detection image.

2. The image display device according to claim 1, wherein
the control portion is configured to perform control of acquiring a difference between a size of the first region and a size of the second region or a ratio of the size of the second region to the size of the first region on the basis of the overlapping state of the first region and the second region in the detection image and determining that the light detection portion has detected the indication object when the difference between the size of the first region and the size of the second region which has been acquired is not greater than a first value or when the ratio of the size of the second region to the size of the first region which has been acquired is not greater than a second value.

3. The image display device according to claim 2, wherein
the control portion is configured to perform control of determining that the light detection portion has detected the object other than the indication object when the difference between the size of the first region and the size of the second region which has been acquired is greater than the first value or when the ratio of the size of the second region to the size of the first region which has been acquired is greater than the second value.

4. The image display device according to claim 2 or 3, wherein
the size of the first region and the size of the second region are sizes of short axis diameters of the first region and the second region or sizes of long axis diameters of the first region and the second region in a case where the first region and the second region are nearly ellipsoidal, or a size of an area of the first region and a size of an area of the second region.

5. The image display device according to claim 4, wherein
the size of the first region and the size of the second region are the sizes of the short axis diameters (D1a, D2a, D1b, D2b) of the first region and the second region in the case where the first region and the second region are nearly ellipsoidal.

6. The image display device according to any of claims 1 to 5, wherein
the projection image is projected from a side opposite to a side on which indication is performed by the indication object toward the indication object.

7. The image display device according to any of claims 1 to 6, wherein
the control portion is configured to recognize a plurality of indication objects individually on the basis of the overlapping state of the first region and the second region in the detection image when there are the plurality of indication objects.

8. The image display device according to any of claims 1 to 7, wherein
the control portion is configured to perform control of acquiring an indication position indicated by the indication object on the basis of the first region corresponding to the indication object which has been detected when determining that the light detection portion has detected the indication object.

9. The image display device according to claim 8, wherein
the control portion is configured to perform control of invalidating a detection signal related to the object other than the indication object which has been detected when determining that the light detection portion has detected the object other than the indication object.

10. The image display device according to any of claims 1 to 9, wherein
the control portion is configured to perform control of determining that the light detection portion has detected the object other than the indication object regardless of the overlapping state of the first region and the second region when a size of the first region which has been acquired is larger than a prescribed size.

11. The image display device according to any of claims 1 to 10, wherein
the indication object is a user's finger, and
the control portion is configured to acquire an orientation of a palm (P) in an extensional direction of a portion of the second region not overlapping with the first region from the first region on the basis of the first region and the second region corresponding to the user's finger which has been detected when determining that the light detection portion has detected the user's finger as the indication object.

12. The image display device according to claim 11, wherein
the control portion is configured to perform control of acquiring a first orientation of a palm (Pa, Pc) corresponding to a first user's finger and a second orientation of a palm (Pb, Pd) corresponding to a second user's finger different from the first user's finger and determining that the first user's finger and the second user's finger are parts of a same hand when a line segment extending in the first orientation of the palm (La, Lc) and a line segment extending in the second orientation of the palm (Lb, Ld) intersect with each other.

13. The image display device according to claim 11 or 12, wherein
the control portion is configured to perform control of acquiring a first orientation of a palm corresponding to a first user's finger and a second orientation of a palm corresponding to a second user's finger different from the first user's finger and determining that the first user's finger and the second user's finger are parts of different hands when a line segment extending in the first orientation of the palm and a line segment extending in the second orientation of the palm do not intersect with each other.

14. The image display device according to any of claims 1 to 13, further comprising:
a projection portion (20) projecting the projection image; and
a display portion (10) on which the projection image is projected by the projection portion, wherein
the light detection portion is configured to detect light emitted to the display portion by the projection portion, reflected by the indication object and the object other than the indication object.

15. The image display device according to any of claims 1 to 14, configured to be capable of forming an optical image (381) corresponding to the projection image in the air, and
further comprising an optical image forming member (380) to which light forming the projection image is emitted from a first surface side, configured to form the optical image corresponding to the projection image in the air on a second surface side, wherein
the light detection portion is configured to detect the light reflected by the indication object and the object other than the indication object.
